Europäisches Patentamt

European Patent Office

Office européen des brevets

(19)

(11) Veröffentlichungsnummer : **0 100 392**
**B1**

(12) # EUROPÄISCHE PATENTSCHRIFT

(45) Veröffentlichungstag der Patentschrift :
26.03.86

(51) Int. Cl.⁴ : **G 02 C 5/20**

(21) Anmeldenummer : **83100169.8**

(22) Anmeldetag : **11.01.83**

(54) **Stufenlos längenverstellbarer Brillenbügel.**

(30) Priorität : **27.07.82 DE 3228054**

(43) Veröffentlichungstag der Anmeldung :
**15.02.84 Patentblatt 84/07**

(45) Bekanntmachung des Hinweises auf die Patenterteilung : **26.03.86 Patentblatt 86/13**

(84) Benannte Vertragsstaaten :
**AT CH DE FR GB IT LI**

(56) Entgegenhaltungen :
**DE-C- 584 021**
**FR-A- 2 249 353**
**FR-A- 2 455 754**

(73) Patentinhaber : **OPTYL HOLDING GMBH & CO. VERWALTUNGS-KG**
**Hans-Stiessberger-Strasse 2a**
**D-8013 Haar bei München (DE)**

(72) Erfinder : **Schmidthaler, Johann**
**Binderlandweg 4**
**A-4020 Linz (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 100 392 B1

**Beschreibung**

Die Erfindung bezieht sich auf einen längenverstellbaren, zweiteiligen Brillenbügel, bei welchem der erste Bügelteil hohl ausgebildet ist und den zweiten Bügelteil teleskopartig verschiebbar in sich aufnimmt.

Bei bekannten Brillenbügeln dieser Art ist ein Bügelteil mit im Abstand hintereinander angeordneten Raststellen ausgestattet, in die ein am anderen Bügelteil angebrachter Stift der Reihe nach einrasten kann. Die im Abstand hintereinander befindlichen Raststellen bringen es mit sich, dass eine stufenlose Längenverstellung des Brillenbügels nicht möglich ist. Man hat daher den Abstand der einzelnen Raststellen so weit vermindert, dass diese aneinander stossen und gemeinsam einen Längsschlitz mit gezackten oder gewellten Rändern bilden, wobei jeder Zacken bzw. jedes Wellental eine einzelne Raststelle bildet. Es sind auch verstellbare Brillenbügel bekannt geworden, die ein Verstellen sogar bei aufgesetzter Brille gestatten, doch auch bei diesen Bügeln erfolgt die Verstellung, wenn auch in kleinen Stufen, nicht stufenlos.

Eine stufenlose Verstellmöglichkeit bietet der im Deutschen Gebrauchsmuster 1 729 857 beschriebene Brillenbügel, bei welchem der hohl ausgebildete Bügelteil einen Längsschlitz mit glatten Rändern aufweist, durch welchen hindurch eine Schraube in den zweiten Bügelteil eingeschraubt ist, welcher teleskopartig im Hohlteil steckt. Beim Anziehen dieser Schraube klemmt der verbreiterte Schraubenkopf den zweiten Bügelteil am Hohlteil fest. Jedoch ist dieser Bügel, wenn auch stufenlos, nicht bei aufgesetzter Brille verstellbar.

Der Erfindung liegt daher die Aufgabe zugrunde, einen Brillenbügel der obengenannten Art zu schaffen, welcher stufenlos und ausserdem noch bei aufgesetzter Brille bequem längenverstellbar ist.

Diese Aufgabe wird durch einen Brillenbügel der eingangs genannten Gattung gelöst, welcher sich dadurch kennzeichnet, dass die Hülsenwandung des ersten Bügelteils auf sich gegenüberliegenden Seiten Aussparungen aufweist, welche eine Langmutter aufnehmen, wobei in die Langmutter das eine Ende eines Gewindestabes eingeschraubt ist, dessen anderes Ende im zweiten Bügelteil fest verankert ist.

Vorzugsweise weist der zweite, meist massiv ausgebildete Bügelteil eine Skala zum Ablesen der jeweilig eingestellten Bügellänge auf. Es ist auch zweckmässig, an mindestens einer Stirnseite der Langmutter eine Federscheibe in den Aussparungen vorzusehen, die ein unbeabsichtigtes Verdrehen der Langmutter bei leichter Berührung verhindert.

Die Erfindung sei nunmehr unter Bezugnahme auf die anliegenden Zeichnungen näher erläutert. Die Zeichnungen zeigen sämtlich den rechten Brillenbügel sowie dessen Bestandteile. Es versteht sich, dass der linke Brillenbügel in gleicher Weise spiegelbildlich ausgestaltet ist. Im einzelnen zeigen :

Figur 1 den fertig montierten erfindungsgemässen Brillenbügel mit Blick auf seine Aussenseite (d. h. die vom Kopf des Brillenträgers abgewandte Seite) ;

Figur 2a und b den Brillenbügel von Fig. 1 mit gleicher Blickrichtung im auseinandergenommenen Zustand ;

Figur 3 eine perspektivische Ansicht des ersten, hülsenartig hohl ausgebildeten Bügelteils des Brillenbügels von Fig. 1 ;

Figur 4a und b den Brillenbügel von Fig. 1 im auseinandergenommenen Zustand mit Blick auf seine Innenseite (d. h. die dem Kopf des Brillenträgers zugewandte Seite) ;

Figur 5 eine der Fig. 4 ähnliche Ansicht des ersten Bügelteils mit herausgenommener Langmutter und Federscheibe ; und

Figur 6 eine Ansicht von oben auf den in Fig. 5 gezeigten ersten Bügelteil.

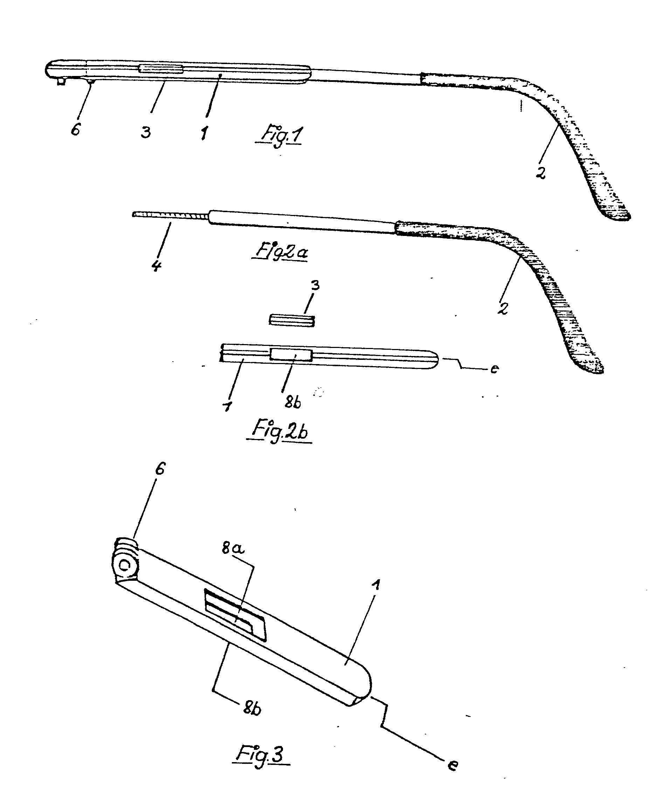

Die Fig. 2a lässt den zweiten Bügelteil 2 erkennen, welcher bei der hier beispielhaft beschriebenen Ausführungsform massiv und als hinterer, die Ohrmuschel umgreifender Bügelteil ausgebildet ist. Das vordere Ende, d. h. das von der Ohrmuschel abgewandte Ende dieses Bügelteils wird zur Montage des Brillenbügels bei e (Fig. 2b und 3) in das hintere Ende des vorderen, hülsenartig ausgebildeten, ersten Bügelteils 1 (Fig. 2b) eingesteckt und ist in diesem teleskopartig verschiebbar. Im vorderen Ende des Bügelteils 2 ist ferner ein Gewindestab 4 fest verankert, welcher sich bei in den Bügelteil 1 eingeschobenem Bügelteil 2 in den Hohlraum des Teils 1 hinein und über Aussparungen 8a, 8b im Bügelteil 1 hinausgehend in Richtung auf das Scharnier 6 am vorderen Ende des Bügelteils 1 erstreckt.

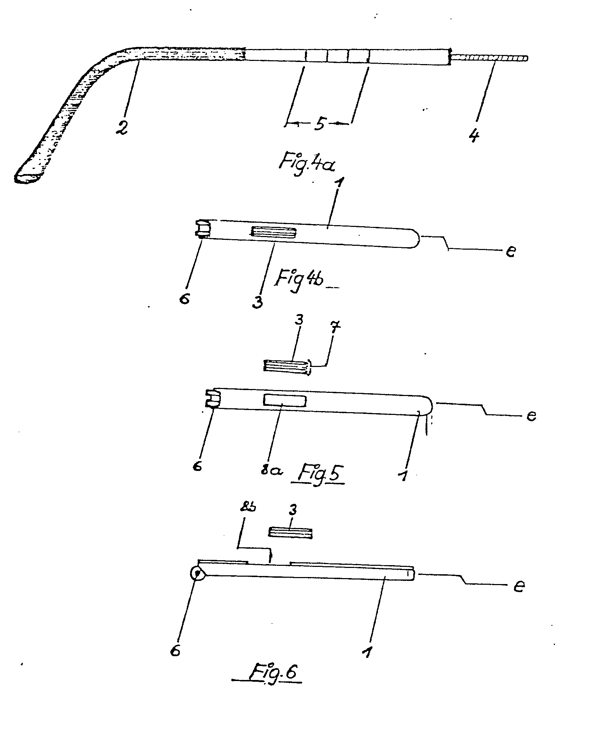

In den Aussparungen 8a, 8b ist bei fertig montiertem Bügel eine Langmutter 3 (Fig. 1 und 4b) eingelegt, welche auf den Gewindestab 4 aufgeschraubt ist. Die Langmutter 3 ist in den Aussparungen 8a, 8b um ihre Längsachse drehbar, wobei durch eine solche Drehung — bedingt durch die Steigung des Gewindes — eine Axialverschiebung zwischen Mutter und Gewindestab erfolgt. Da nun die Langmutter 3 in den Aussparungen 8a, 8b axial festgehalten wird, bewirkt die Drehung der Langmutter 3 somit auch eine Axialverschiebung des zweiten Brillenteils 2 im hülsenartigen Bügelteil 1, wodurch sich die Länge des gesamten Bügels ändert.

Zwischen den Stirnseiten der Langmutter 3 und den daran anstossenden Begrenzungen der Aussparungen 8a, 8b sollte praktisch kein Spielraum bestehen, damit eine Axialverschiebung der Mutter 3 in den Aussparungen, die sich auf die Einstellgenauigkeit der Bügellänge auswirken würde, vermieden wird. Vorteilhafterweise ist an mindestens einer Stirnseite der Langmutter 3 eine Federscheibe 7 (Fig. 5) in den Aussparungen 8a, 8b gelagert. Eine solche Federscheibe schaltet nicht nur jeden axialen Spielraum zwischen Mutter und Aussparungen aus, sondern bietet zusätzlich infolge der ausgeübten Federspannung eine Sicherung gegen unbeabsichtigtes Drehen der Langmutter bei nur leichter Berührung.

Vorzugsweise ist der zweite Bügelteil 2 auf seiner Innenseite mit einer Skala 5 (Fig. 4a) versehen, an welcher bei fertig montiertem Bügel im Zusammenwirken mit dem Rand e (Fig. 4b) des ersten Bügelteils 1 die jeweilig eingestellte Bügellänge abgelesen werden kann.

Bei einer Brille, welche mit den erfindungsgemässen Bügeln ausgestattet ist, lässt sich die Bügellänge — selbst bei aufgesetzter Brille — ohne Mühe stufenlos einstellen. Der Brillenträger braucht lediglich die Langmutter 3 in beiden Bügeln zu drehen, indem er Zeige- oder Mittelfinger aufwärts oder abwärts über den Umfang der Langmutter bewegt. Zum besseren Angriff der Finger an den Muttern ist der Umfang der Langmuttern zweckmässig mit Längsrillen oder anderen geeigneten Rillenführungen versehen.

Es ist auch zweckmässig, die Kombination Gewindestab/Langmutter am einen Brillenbügel mit Rechtsgewinde und am anderen Brillenbügel mit Linksgewinde auszustatten, damit ein gleichzeitiges Führen der Finger über die Umfänge beider Muttern in gleicher Richtung (z. B. von unten nach oben) auch eine Längenverstellung beider Bügel in gleicher Richtung (z. B. eine Verkürzung) bewirkt.

Der erfindungsgemässe, stufenlos längenverstellbare Brillenbügel ist für Brillen jeder Art geeignet, beispielsweise für Brillen mit optischen Korrekturlinsen, Sportbrillen, Sonnenbrillen, am Arbeitsplatz verwendete Schutzbrillen, Brillen für Schwerhörige usw. Im letzteren Falle kann der hintere, auf der Ohrmuschel aufliegende bzw. die Ohrmuschel umfassende Bügelteil mit einem Hörgerät versehen sein.

**Patentansprüche**

1. Stufenlos längenverstellbarer, zweiteiliger Brillenbügel, bei welchem ein erster Teil (1) des Bügels hülsenartig hohl ausgebildet ist und einen zweiten Bügelteil (2) teleskopartig verschiebbar in sich aufnimmt, dadurch gekennzeichnet, dass die Hülsenwandung des ersten Bügelteils (1) auf sich gegenüberliegenden Seiten Aussparungen (8a, 8b) aufweist, welche eine Langmutter (3) aufnehmen, wobei in die Langmutter das eine Ende eines Gewindestabes (4) eingeschraubt ist, dessen anderes Ende im zweiten Bügelteil (2) fest verankert ist.

2. Brillenbügel nach Anspruch 1, dadurch gekennzeichnet, dass der zweite Bügelteil (2) eine Skala (5) zum Ablesen der jeweilig eingestellten Brillenlänge aufweist.

3. Brillenbügel nach Anspruch 1 und 2, dadurch gekennzeichnet, dass der erste Bügelteil (1) der vordere, an der Sichtscheibeneinfassung mit Scharnier (6) angelenkte Bügelteil ist und der zweite Bügelteil (2) der hintere, hinter der Ohrmuschel aufliegende bzw. die Ohrmuschel umfassende Bügelteil ist.

4. Brillenbügel nach Anspruch 1 bis 3, dadurch gekennzeichnet, dass an mindestens einer Stirnseite der Langmutter (3) eine Federscheibe (7) in den Aussparungen (8a, 8b) gelagert ist.

5. Brillenbügel nach einem der Ansprüche 1 bis 4, dadurch gekennzeichnet, dass der hintere, auf der Ohrmuschel aufliegende bzw. die Ohrmuschel umfassende Bügelteil ein Hörgerät aufweist.

6. Brillenbügel nach einem der Ansprüche 1 bis 5, dadurch gekennzeichnet, dass die Langmutter (3) und der Gewindestab (4) am einen Brillenbügel mit Rechtsgewinde und am anderen Brillenbügel mit Linksgewinde ausgestattet sind.

**Claims**

1. A two-part spectacles sidepiece of continuously adjustable length, in which a first part (1) of the sidepiece is of hollow construction in the form of a sleeve and telescopically accommodates a second part (2), characterised in that the wall of the sleeve of the first part (1) of the sidepiece has recesses (8a, 8b) on opposite sides to receive an elongate nut (3), one end of a screwthreaded rod (4) being screwed into the nut, the other end of the rod being anchored firmly in the second part (2) of the sidepiece.

2. A spectacles sidepiece according to claim 1, characterised in that the second part (2) of the sidepiece has a scale (5) to show the length to which the sidepiece has been adjusted.

3. A spectacles sidepiece according to claims 1 and 2, characterised in that the first part (1) of the sidepiece is the front part of the sidepiece, which is pivotally connected to the lens mounting by a hinge (6) and the second part (2) is the rear part which lies behind or around the ear.

4. A spectacles sidepiece according to claims 1 to 3, characterised in that a spring washer (7) is mounted in the recesses (8a, 8b) at least at one end of the nut (3).

5. A spectacles sidepiece according to any one of claims 1 to 4, characterised in that the rear part of the sidepiece resting on or lying round the ear contains a hearing aid.

6. A spectacles sidepiece according to any one of claims 1 to 5, characterised in that the elongate nut (3) and the screwthreaded rod (4) have a right-hand thread on one of the sidepieces and a left-hand thread on the other.

**Revendications**

1. Branche de lunettes en deux parties, réglable en longueur de façon continue, dans laquelle la première partie (1) de la branche est creuse en forme de douille et reçoit, à son intérieur, la seconde partie de la branche (2) susceptible de coulisser télescopiquement, branche de lunettes caractérisée en ce que la paroi de la douille de la première partie (1) de la branche comporte, sur ses faces opposées, des évidements (8a, 8b) dans lesquels se loge un écrou oblong (3), une des extrémités d'un barreau fileté (4) étant vissée dans cet écrou oblong, tandis que l'autre extrémité est fermement ancrée dans la deuxième partie (2) de la branche.

2. Branche de lunettes selon la revendication 1, caractérisée en ce que la deuxième partie (2) de la branche comporte une graduation (5) pour lire la longueur correspondante ainsi réglée des lunettes.

3. Branche de lunettes selon les revendications 1 et 2, caractérisée en ce que la première partie (1) de la branche est la partie antérieure de la branche articulée par une charnière (6) à la monture des verres de vision, tandis que la seconde partie (2) de la branche est la partie arrière de la branche s'appliquant derrière le pavillon de l'oreille ou bien enserrant le pavillon de l'oreille.

4. Branche de lunettes selon les revendications 1 à 3, caractérisée en ce qu'une rondelle élastique (7) est montée au moins contre une face frontale de l'écrou oblong (3) dans les évidements (8a, 8b).

5. Branche de lunettes selon une des revendications 1 à 4, caractérisée en ce que la partie arrière de la branche s'appliquant sur le pavillon de l'oreille ou bien enserrant le pavillon de l'oreille comporte un appareil auditif.

6. Branche de lunettes selon une des revendications 1 à 5, caractérisée en ce que l'écrou oblong (3) et le barreau fileté (4) sont pourvus sur une branche de lunettes d'un filetage à droite et sur l'autre branche de lunettes d'un filetage à gauche.

Fig.1

Fig.2a

Fig.2b

Fig.3

Fig.4a

Fig 4b

Fig 5

Fig.6